# EUROPEAN PATENT APPLICATION

(11) **EP 1 217 358 A1**
(43) Date of publication of application: **26.06.2002**
(21) Application number: 01108404.3
(22) Date of filing: 03.04.2001
(51) Int. Cl.: G01N 21/90

(54) **Impurities inspection system**

(30) Priority: 24.11.2000 JP 2000357665; 26.01.2001 JP 2001018055
(71) Applicant: Scan Technology Co., Ltd., Tokyo (JP)
(72) Inventor: Yagita, Kiyoshi, Scan Technology Co., Ltd., Tokyo (JP)
(74) Representative: Hirsch, Peter, Dipl.-Ing.

(57) **Abstract**

An impurities inspection system is for detecting impurities contained in a colored liquid that may have entered the liquid in a production line for producing colored liquid products such as drinks and liquid agents. This invention is fulfilled by irradiating infrared light no less than the first specified power and no more than the second specified power to the specimen and receiving transmitted light from the specimen by means of a CCD sensor.

## Description

### BACKGROUND OF THE INVENTION

### 1. Field of the Invention

This invention pertains to an impurities inspection system that inspects impurities in drinks, medicine, and other liquid products (including liquid-state products) and pertains particularly to an impurities inspection system that inspects on a real-time basis and in a secure manner the presence or lack of suspended and deposited impurities in coffee, cola, and other colored liquids.

### 2. Description of the Related Art

As the applicable food sanitary laws are based on HACCP (hazard analysis of critical control points) and the PL (product liability) regulations are enforced, it will be obligatory to avoid any undesired incident, such as microbial contamination or entrance of impurities (e.g. metal, a piece of cloth and hair) which may occur in all steps of food quality control from the production and process of food and medicine products to storage, shipment, and consumption of the products and to increase the cleanliness and the safety of such products.

HACCP has been developed in U.S.A. and is known throughout the world as one of the best sanitary control system methods. The HACCP is intended for evaluating the safety of products in all manufacturing processes as compared with conventional sanitary control methods where the final products are a subject to be inspected the HACCP particularly focuses on the preventive quality control in each process and consists mainly of two major sections: hazard analysis and critical control points. Any possibility of hazardous incidents such as microbial contamination which may occur in each step of the manufacturing and processing of foods and the storage and shipment of products before the end consumers is reviewed and analysed through determining the critical control points for preventive actions and the control standards and constantly monitoring and checking the records of control whether or not the requirements are fulfilled within allowance. Also, other hazardous items are controlled by the pre-requisite program to prevent any adulteration in the process and to improve the safety quality of products.

In manufacturing and processing plants for liquid products (e.g. beverages, liquid medicine and liquid-state products), heating and pasteurization processes are used for preventing microbial contamination in the production line and removal of impurities with cyclone separators or the like is implemented for adulteration. When the products have been packed in containers such as cans or bottles, they are visually inspected for final, before-delivery checking. More specifically, manufacturing and processing plants for liquid products such as soft drinks or fruits and vegetable juice yield a very large quantity of products by transferring liquid materials from steps of removal of impurities to tanks and then conveying them via tubular conduits (pipelines) to a filler where a stream of containers, such as cans or bottle, are automatically filled with the mixed materials.

In such manufacturing and processing plants, the products in process may be adulterated by foreign matters which are substantially classified in the term of source into: "material impurities" contained in the materials, "environmental impurities" entering the materials not packaged, and "equipment impurities" generated in manufacturing equipment in the production line. The removal of impurities from the liquid product which are greater in specific gravity than the liquid product can be implemented by the use of a cyclone separator or the like. The impurities, which are greater in particle size than the materials can be removed by filtration. Those are common processes for removing foreign matters from the liquid products before the major process in manufacturing steps of the conventional manufacturing and processing plants as well as the final inspection and test for ensuring the safety of the products.

However, there is still potential for adulteration with impurities in the manufacturing/processing step even if the preprocess inspection and the removal of impurities from the materials have been carried out. For example, the liquid materials may be contaminated with environmental and equipment impurities while being conveyed from their respective tanks via pipelines to the filler station where they are packaged into containers such as cans. For compensation, the liquid products such as tea or milk are filtered by a fairly fine filter to remove minute particles with simplicity. Fiber matters are likely to block up a screen of the filter and may be removed by the filter with much difficulty. The material including particles of different sizes is filtered by a series of filters to remove impurities which are greater in size than the particles but equipment impurities added after the material stage will rarely be removed by filtration. Visual inspection is not applicable to the liquid product running in the pipeline and makes the removal of impurities impossible.

In current practice, therefore, when a product containing a fibrous or grainy material is manufactured, visual inspectors conduct a visual check of solutions and additives in tanks containing the raw materials and remove any impurities manually. After that until the product is put poured into containers through the pipeline, no such thing as the detection of impurities or impurities removal has been conducted. Visual inspection has no effect on coffee, cola, or other colored liquid and a solution has been called for.

When an impurities inspection is conducted after a liquid product is poured into glass or PET bottles, and if the PET or glass bottles are transparent and the liquid is transparent, impurities inspection can be conducted by an optical method or irradiating a laser or other beam. However, if the liquid is transparent but the PET or glass bottles are colored and translucent, or if the PET or glass bottles are transparent but the poured liquid is coffee, juice, cola, or other colored liquid, impurities inspection cannot be conducted by an optical method or irradiating a laser or other beam. X-rays can also be used for impurities inspection, but X-rays are harmful to the human body and requires bulky equipment, thus being costly.

In consequence, conventional practice involved no impurities inspection at all after a colored liquid product was poured into glass or PET bottles. Exactly the same was true of pipelines. To pursue product perfection, the industry calls for secure impurities inspection on glass or PET bottles and impurities inspection on pipelines. The same is true of colored liquids.

### SUMMARY OF THE INVENTION

This invention was made a reality under these circumstances. Thus, the purpose of this invention is to provide an impurities inspection system that can securely detect impurities in colored liquids in glass and PET bottles pipelines, along with other containers, and impurities in colored glass and PET bottles.

This invention pertains to an impurities inspection system that inspects impurities in a specimen. The aforementioned purpose of this invention is fulfilled by detecting impurities by irradiating infrared light no less than the first specified power (0.7mW) and no more than the second specified power (100W) to the specimen and receiving the transmitted light from a specimen with a CCD sensor.

In addition, the aforementioned purpose of this invention is fulfilled by arranging an image intensifier and a CCD sensor with regard to the specimen and determining the presence or lack of impurities in the specimen through receiving light from the CCD sensor, or by irradiating infrared light to the specimen and receiving transmitted light from the specimen by means of the CCD sensor via the image intensifier.

### BRIEF DESCRIPTION OF THE DRAWINGS

In the accompanying drawings:
FIG. 1 is a view showing the fundamental principle of this invention;
FIG. 2 is a view showing other principles of this invention;
FIG. 3 is a view showing an alternative implementation of FIG. 2;
FIGs. 4A and 4B are image diagrams showing the effects of this invention.
FIGs. 5A and 5B are image diagrams showing the effects of this invention;
FIGs. 6A, 6B and 6C are examples of an image showing an actual typical image of an impurities inspection (suspended impurities) of this invention;
FIG. 7 is a view showing the principle of an impurities inspection (deposited impurities) of this invention;
FIGs. 8A, 8B and 8C are examples of an image showing an actual typical image of an impurities inspection (deposited impurities) of this invention;
FIG. 9 is a block diagram showing a typical application of this invention; and
FIG. 10 is a view showing another example of impurities detection of this invention.

### DESCRIPTION OF PREFERRED EMBODIMENTS

This invention determines whether a glass or PET bottle or pipeline, or other container, contains metal, cloth, hair, dirt, or other impurities (suspended or deposited impurities) by means of infrared radiation, CCD sensor, or image intensifier (I.I.) in a production line for producing drinks, medicines or other liquid products (including liquid-state products). This invention is designed particularly to detect impurities in a liquid automatically and securely without stopping the production line even in the case of coffee, cola, juice, milk or other colored liquid or if the liquid product is mineral water or other transparent material and the glass or PET bottles are translucent or colored. That is, this invention is designed to securely detect in the final stage such impurities that may enter the products in the manufacturing or processing process, as "raw material impurities," which failed to be removed in inspections on raw materials, "environmental impurities," which may enter the products when loaded into the production line, and "impurities from manufacturing equipment," which come from the manufacturing equipment during production, thus preventing defective products containing impurities from being shipped.

A typical form of working of this invention is described below, with reference given to the drawings.

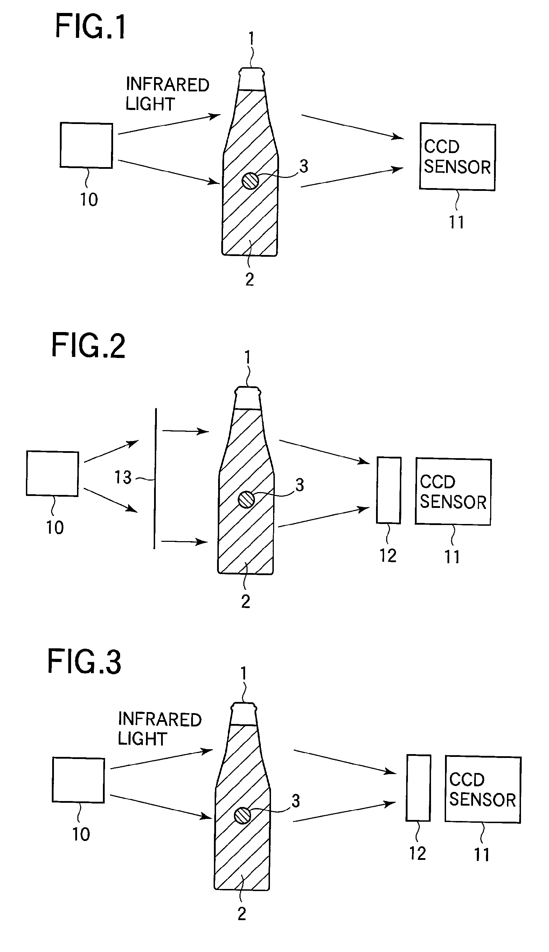

FIG. 1 shows the fundamental principle of an impurities inspection system claimed in this invention. The glass bottle 1, as a specimen, is filled with a colored liquid (such as coffee, cola, and milk), and the liquid 2 contains impurities 3. Since the liquid 2 is colored, the impurities 3 cannot be seen from outside. The impurities 3 are difficult to detect with visual and optical methods. However, the impurities 3 can be detected by irradiating infrared light with wavelengths from 750 and 1,000nm in the power range from 0.7mW to 100W from the infrared source, collecting the transmitted light from the glass bottle 1 with an objective lens (not shown in the figure), and receiving the light with a CCD (charge-coupled device) sensor 11. The CCD sensor 11 has a wide and high wavelength sensitivity characteristic extending from the blue to the near-infrared (a wavelength and sensitivity in the range where the light receiver responds), thus having a high quantum efficiency for capturing photons. The quantum efficiency of photography is 2-3% at the most, while the CCD sensor 11 achieves as much as 90%. Also, the CCD sensor 11 is characterized by a large ratio of the minimum to the maximum brightness that can be measured at the same time (the dynamic range), thus being high in linearity.

It was found that, as a result of these characteristics, the mere storing of electrons in the section by means of the phenomenon of free electrons being generated when the CCD is hit by transmitted light (the photoelectric effect) and detecting those electrons in order after a specified time of exposure could turn a liquid from colored or pitch black to transparent if the liquid is a water solution or other liquid having molecules of high light transmissivity. The same is true of cases when the water solution is transparent and the container is colored.

FIG. 2 indicates a typical arrangement of an image intensifier 12 on the front panel of the CCD sensor 11. The image intensifier 12 is also known as the photoelectric multiplier and is a kind of optical multiplier based on the secondary electron emission effect and consists of a photoelectric face, MCP (micro-channel plate), and fluorescent face. This makes it possible to detect light that are too weak for humans to sense. The device can therefore be used not only for visible radiation but for ultraviolet and near-infrared light as well. FIG. 2 is based on the arrangement of an image intensifier 12 on the front panel of the CCD sensor 11, so that the CCD sensor 11 can capture printed characters and other patterns on the paper 13 arranged in front of the glass bottle 1 filled with a colored liquid 12. In this case, an ordinary kind of infrared radiation will suffice. This principle makes it possible to detect impurities 3 in the glass bottle 1.

In the example of FIG. 3, the device is so designed that infrared radiation is applied to the side of the glass bottle 1 from the infrared source 14, and the transmitted light from the glass bottle 1 can be received with the CCD sensor 11 via the image intensifier 12. In this case, the infrared light will suffice if they have an ordinary wavelength and power (wavelength 870nm and power 0.7mW) and requires no particular regulation. The synergy of the image intensifier 12 and the CCD sensor 11 makes it possible to detect the impurities 3 in the liquid 2 even if the liquid 2 is coffee or other colored liquid or if the glass bottle 1 is colored.

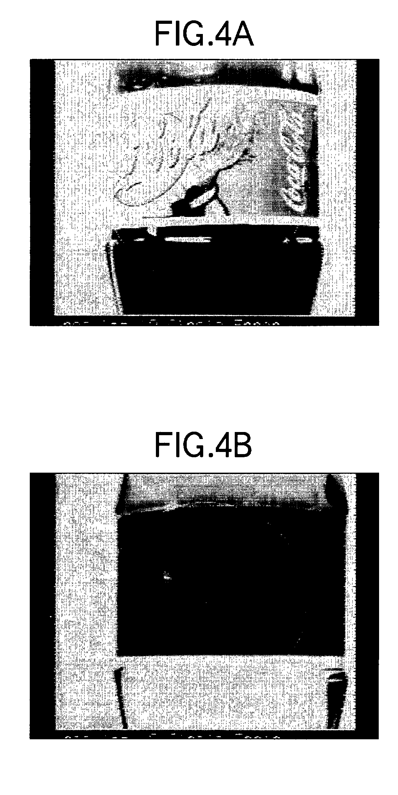

FIGs. 4A and 4B are images from the CCD sensor 11 obtained with the method used in FIG. 1, and the diagram FIG. 4A is an image obtained when no infrared light are applied. It is found that only the outside of the cola bottle is captured as an image and the inside of the bottle cannot be seen. By irradiating infrared light, one can obtain an image obtained by transmitting light through the glass bottle as shown in FIG. 4B.

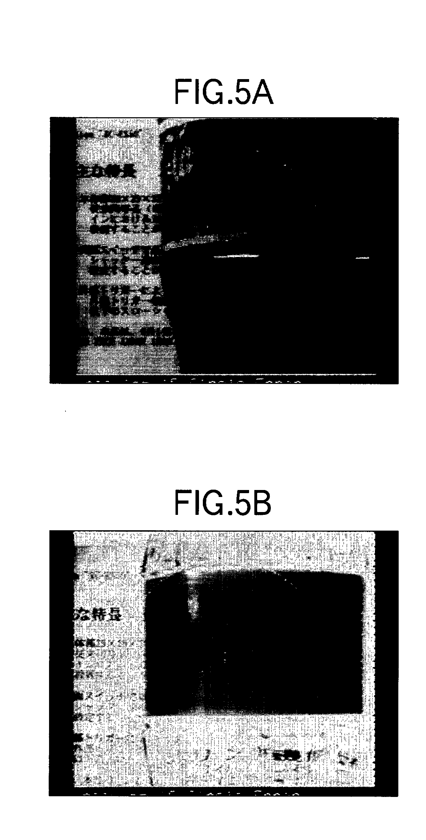

FIGs. 5A and 5B are images taken from a piece of paper on which characters are printed out between the infrared source 10 and the glass bottle 1. The diagram FIG. 5A shows an image taken when no infrared light are applied. By irradiating infrared light, one can read the characters through the glass bottle as shown in the diagram FIG. 5B. This means that, even if the glass bottle is colored such as in the case of a cola bottle 1 and the cola liquid is colored, impurities in the bottle can be inspected with the CCD camera 11.

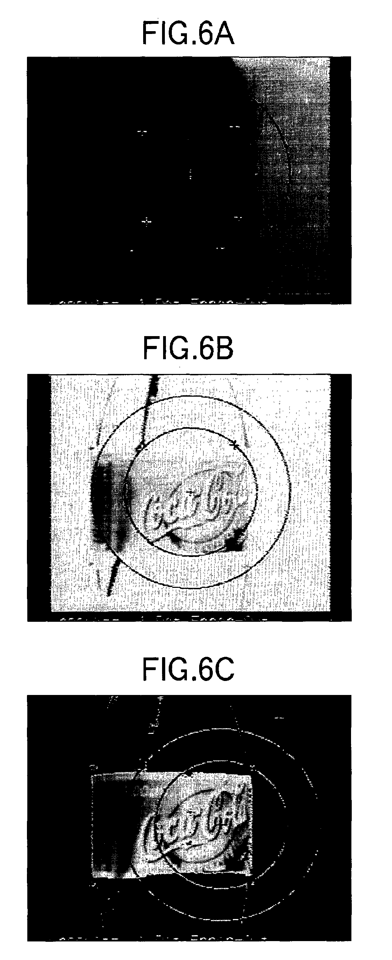

An inspection image taken of suspended impurities that actually entered the glass bottle 1 is shown in FIGs. 6A to 6C and explained below. FIG. 6A shows a screen showing raw data about the CCD sensor through visible light, and the impurities in the glass bottle are not captured as part of the image. On the other hand, FIG. 6B shows a data screen for the CCD sensor when infrared light are used, thus showing bar-like impurities at the left of the screen. FIG. 6C shows a binary image obtained by processing the image of the diagram FIG. 6B. Here, the presence of impurities is clear, which makes it possible to detect impurities.

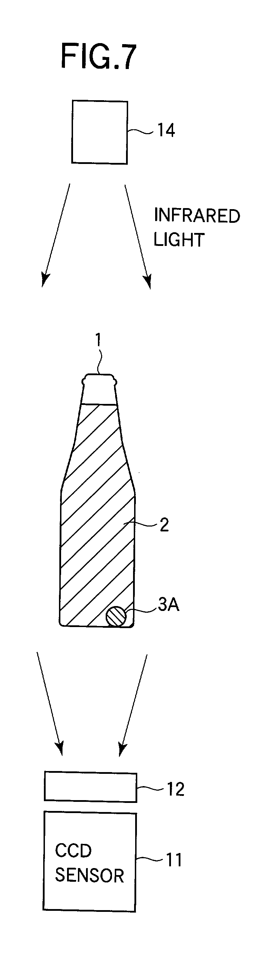

The above description was about the inspection of impurities suspended inside a glass bottle. A similar inspection can be performed on impurities deposited at the bottom of a glass bottle. FIG. 7 shows how such an inspection can be performed. Infrared light are irradiated from the infrared source 14 arranged at the bottom of the glass bottle 1 and provision is made to capture images with the image intensifier 12 and the CCD sensor 11 arranged at the top of the glass bottle 1. Such a configuration allows the CCD sensor 11 to detect the impurities 3A settled at the bottom of the glass bottle 1. FIG. 7 is based on the arrangement of an infrared source 14, image intensifier 12, and CCD sensor 11 along an optical axis orthogonal to the bottom of the glass bottle. They can also be arranged in an inclined manner.

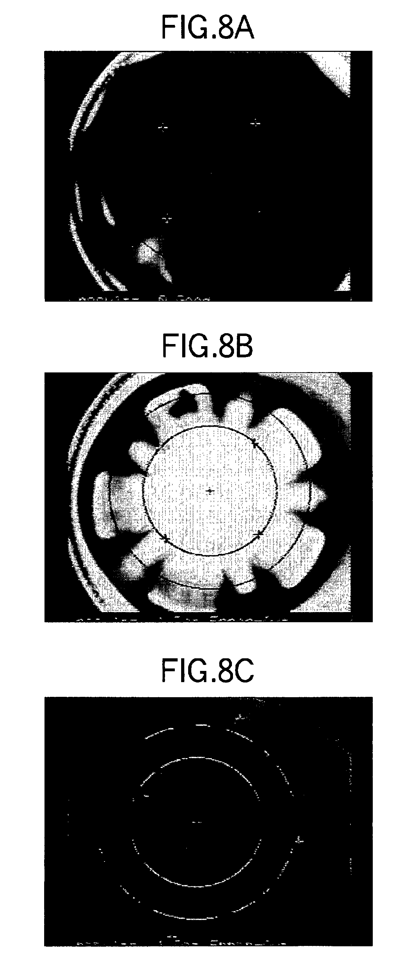

Next, an actual image to be taken when deposited impurities enter the glass bottle 1 is indicated in FIGs. 8A to 8C, and it is explained below. FIG. 8A shows a raw data image of the CCD sensor 11 with visible radiation, and the impurities inside the glass bottle 1 are not captured as part of the image. On the other hand, FIG. 8B shows a data image of the CCD sensor 11 when infrared light are used, so that a T-shaped impurity is captured at the top of the screen. FIG. 8C is a binary image obtained by processing the image obtained in the diagram FIG. 8B. Here, the presence of the impurities is clear, which allows impurities to be detected.

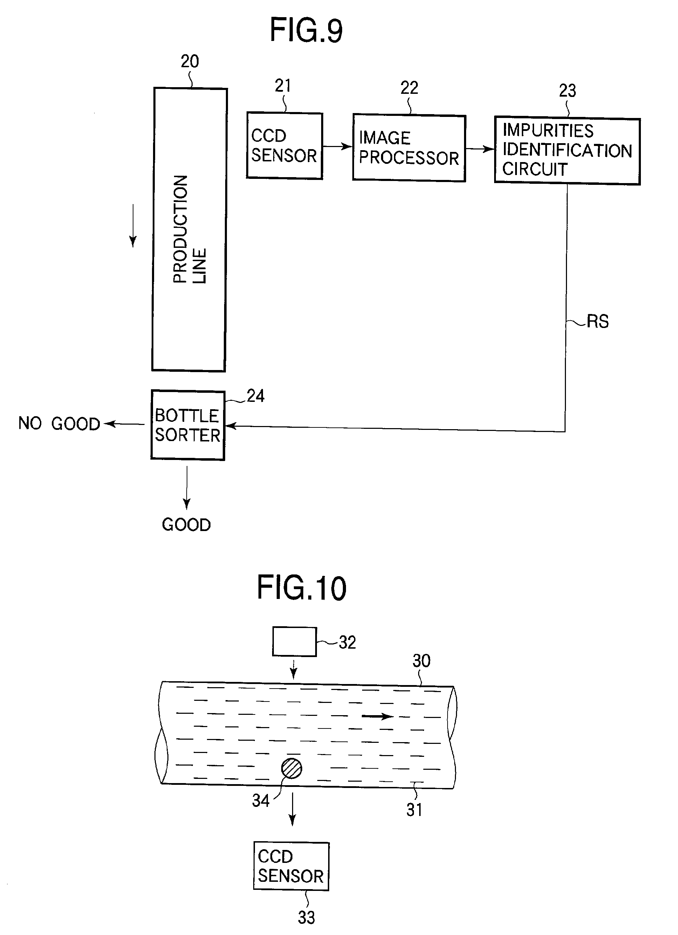

Next, a typical application of this invention to the production line and it is explained with FIG. 9.

Cola bottles, for example, are running on the production line 20. These cola bottles are detected with a CCD sensor 21 by means of the aforementioned method. Signals detected by the CCD sensor 21 are image-processed by the image processor 22, and the impurities identification circuit 23 determines the presence or lack of impurities. When any impurity is identified, the circuit produces a reject signal RS. The production line 20 is provided with a cola bottle sorter 24, and cola bottles corresponding to the reject signal RS are rejected to divide the bottles into acceptable and defective ones. This allows one to produce only acceptable products and ship them.

The above explanation was about the detection of impurities in bottles. Similar detection of impurities is possible on colored liquids flowing through a pipeline. FIG. 10 shows how such an inspection can be performed, and the pipeline 30 has a colored liquid 31 flowing inside it. It can be flanked by an infrared source 32 on one side, and a CCD sensor 33 on the other, thus detecting impurities 34 that entered the liquid 31.

As described above, this invention can detect impurities contained in products and remove defective products containing such impurities whether a colored liquid is contained in glass or PET bottles or the glass or PET bottles are colored. This makes it possible to eliminate impurities that may enter the products up until immediately before the liquid is poured into glass or PET bottles and becomes a final product. The product can thus be made even safer.

## Claims

1. An impurities inspection system for detecting impurities in a specimen by irradiating infrared light no less than the first specified power and no more than the second specified power to the specimen, and receiving transmitted light from the specimen by means of a CCD sensor.

2. An impurities inspection system according to Claim 1, wherein the first specified power is 0.7mW.

3. An impurities inspection system according to Claim 1, wherein the second specified power is 100W and which is specified in Claim 1.

4. An impurities inspection system according to Claims 1, 2 or 3, wherein the wavelength of the infrared light is 750 to 1,000nm.

5. An impurities inspection system according to Claim 1, wherein the impurities are suspended or deposited impurities.

6. An impurities inspection system according to Claim 1, 2, 3, 4 or 5, wherein the specimen is a colored liquid.

7. An impurities inspection system according to Claim 4, wherein the colored liquid is contained in glass or PET bottles.

8. An impurities inspection system according to Claim 7, wherein the glass or PET bottles are made of transparent, translucent, or colored material.

9. An impurities inspection system for detecting impurities in a specimen by arranging an image intensifier and a CCD sensor with regard to the specimen, and receiving light through the CCD sensor.

10. An impurities inspection system according to Claim 9, further comprising the step of irradiating infrared light to the specimen, and receiving transmitted light from the specimen by means of the CCD sensor via the image intensifier.

11. An impurities inspection system according to Claim 10, wherein the wavelength of the infrared light is 750 to 1,000nm.

12. An impurities inspection system according to Claim 9,10 or 11, wherein the specimen is a colored liquid.

13. An impurities inspection system according to Claim 12, wherein the colored liquid is contained in glass or PET bottles.

14. An impurities inspection system according to Claim 9, wherein the impurities are suspended or deposited impurities.

15. An impurities inspection system according to Claim 13, wherein the glass or PET bottles are made of transparent, translucent, or colored material.
